# EUROPEAN PATENT APPLICATION

(11) **EP 4 421 340 A1**
(43) Date of publication of application: **28.08.2024**
(21) Application number: 21961369.2
(22) Date of filing: 20.10.2021
(51) Int. Cl.: F16D 3/50, F16D 3/74

(54) **CONNECTION MEMBER**

(71) Applicant: Nature Architects Inc., Tokyo 107-0052 (JP)
(72) Inventor: TANIMICHI Kotaro, 1030011 Tokyo (JP)
(74) Representative: Kuhnen & Wacker Patent- und Rechtsanwaltsbüro PartG mbB
(86) International application number: PCT/JP2021/038700
(87) International publication number: WO 2023/067716

(57) **Abstract**

A connector connecting a first member and a second member, includes at least one spiral part in a shape where the thickness is added to a spiral surface formed by a spiral trajectory in which a line, connecting a first point located on a center axis passing through a first position on the first member side and a second position on the second member side and a second point located at a position away from the center axis, rotates around the center axis with the first point as a center while the first point moves in a direction along the center axis. The connector is integrally molded as a whole . This makes it possible to reduce the number of parts and simplify the assembly process compared to the ball joint and universal joint.

## Description

### Technical Field

The present disclosure relates to a connector.

### Background

A conventionally proposed ball joint includes a bottom cylindrical housing coupled to one member and having an opening at one end, a ball stud coupled to the other member and having a spherical head, a ball seat rotatably receiving the spherical head of the ball stud and fitted in the housing, and a dust cover attached between the ball stud and housing (see Patent Literature 1).

Another conventionally proposed universal joint also includes a first yoke attached to a first shaft, a second yoke attached to a second shaft, and a cross-shaped assembly interconnecting the first yoke and the second yoke (see Patent Document 2).

### Citation List

### Patent Literature

PTL1: Japanese Patent No. 3369659
PTL2: Japanese Laid-Open Patent Publication No. 2000-314431

### Summary

The ball joint of Patent Document 1 includes the housing, ball stud, ball seat, dust cover, and so on. The universal joint of Document 2 includes the first yoke, second yoke and cross-shaped assembly. Therefore, the ball joint and universal joint require a large number of parts and a complicated assembly process.

According to one aspect of the present disclosure, the following connector is provided. The connector, which connects a first member and a second member, includes at least one spiral part in a shape where the thickness is added to a spiral surface formed by a spiral trajectory in which a line, connecting a first point located on a center axis passing through a first position on the first member side and a second position on the second member side and a second point located at a position away from the center axis, rotates around the center axis with the first point as a center while the first point moves in a direction along the center axis. The connector is integrally molded as a whole.

Other features and advantages of the present disclosure will be understood from the following description and the accompanying drawings, which are given by way of example and not exhaustive.

### Brief Description of Drawings

FIG. 1 is an external view of a connector 20 of the present disclosure.
FIG. 2 is a cross-sectional view of the connector 20.
FIG. 3 is an external view of the connector 20 when the connector 20 is bent.
FIG. 4 is a cross-sectional view of the connector 20 when the connector 20 is bent.
FIG. 5 is an external view of a connector 20B.
FIG. 6 is a cross-sectional view of the connector 20B.
FIG. 7 is a partial cross-sectional view of the connector 20.
FIG. 8 is a partial cross-sectional view of the connector 20B.
FIG. 9 is an external view of a connector 20C.
FIG. 10 is a cross-sectional view of the connector 20C.
FIG. 11 is an external view of a connector 20D.
FIG. 12 is an external view of a connector 20E.

### Description of Embodiments

The following describes some aspects of the disclosure with reference to embodiments.

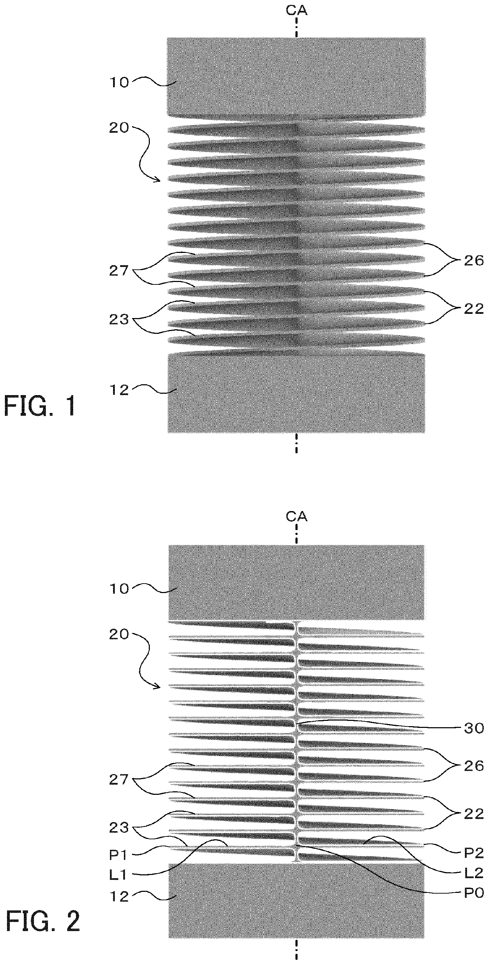

FIG. 1 is an external view of a connector 20 according to an embodiment of the present disclosure. FIG. 2 is a cross-sectional view of the connector 20 of FIG. 1, cut in a plane containing a center axis CA passing through its center of gravity and extending in an upward-downward direction of FIG. 1 and parallel to the paper surface.

The connector 20 is integrally molded, for example, by injection molding, blow molding, extrusion molding, or 3D printing of resin or rubber material, or by casting, forging, pressing, cutting, extrusion molding, or 3D printing of metal material. The connector 20 is constructed as an integrally molded member.

The connector 20 includes two spiral parts 22 and 26 expanding in a spiral shape with an inner diameter of substantially zero around the center axis CA as shown in FIG. 1 and FIG. 2. The two spiral parts 22 and 26 are each formed in a shape in which the thickness is added to spiral surfaces 23 and 27 in the extending direction of the center axis CA (the upward-downward direction in FIG. 1 and FIG. 2, hereinafter simply referred to as the "axial direction"). The spiral surfaces 23 and 27 are each formed in a spiral shape formed by a trajectory in which line segments L1 and L2, connecting a common point P0 on the center axis CA and points P1 and P2 away from the point P0 in a direction perpendicular to the center axis CA, rotate around the center axis CA with the point P0 as the center while the point P0 moves in a direction along the center axis CA. In the embodiment, the line segments L1 and L2 are spaced 180 degrees from each other around the center axis CA, and the lengths of the line segments L1 and L2 are the same. The two spiral parts 22 and 26 (the spiral surfaces 23 and 27) are formed so that the pitch in the axial direction is constant. In the connector 20, the two spiral parts 22 and 26 form a shaft part 30 extending along the center axis CA, and the outer diameter is circular when viewed in the axial direction.

One end (top end in FIG. 1 and FIG. 2) of the connector 20 in the axial direction is fixed to one surface (bottom surface in FIG. 1 and FIG. 2) of the first member 10. The other end (bottom end in FIG. 1 and FIG. 2) of the connector 20 in the axial direction is fixed to one face (top face in FIG. 1 and FIG. 2) of the second member 12.

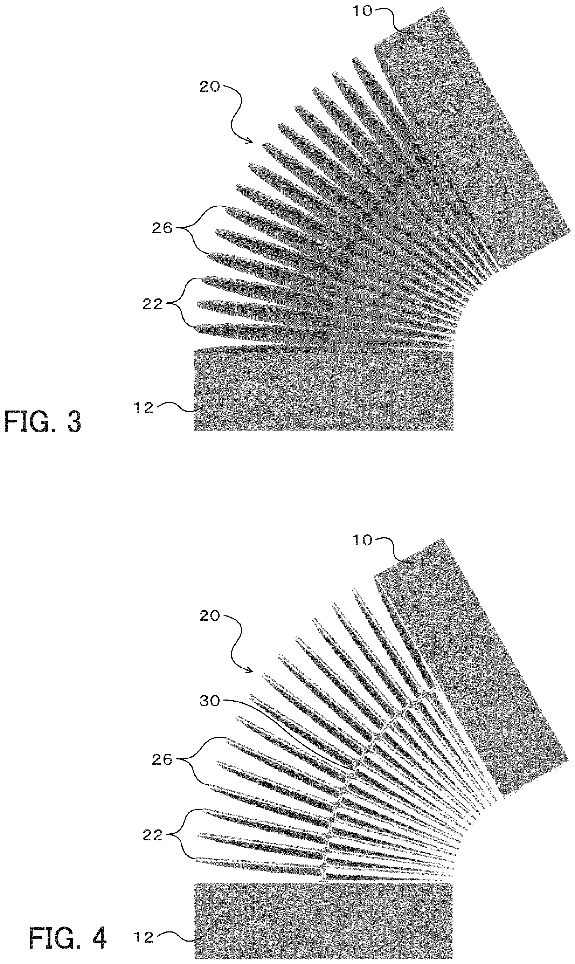

FIG. 3 and FIG. 4 show an external view and a cross-sectional view of the connector 20 when the connector is bent, corresponding to FIG. 1 and FIG. 2, respectively. The connector 20 of the embodiment includes the two spiral parts 22 and 26 which expand in the spiral shape with the inner diameter of zero around the center axis CA, and the two spiral parts 22 and 26 form the shaft part 30 which extends along the center axis CA. Thus, the shaft part 30 has the characteristics of ensuring high stiffness in compression in the axial direction (hereinafter referred to as "axial direction compression"), shearing and torsion, and low stiffness only in bending. Thus, the connector 20 sufficiently allows only elastic deformation due to the bending, while suppressing the elastic deformation due to the axial direction compression, shearing and torsion. Therefore, the connector 20 suppresses the elastic deformation caused by the axial direction compression, shearing and torsion as compared to a coil spring having low stiffness with respect to the axial direction compression, shearing, torsion and bending. In addition, the connector 20 suppresses the elastic deformation caused by the torsion as compared to a cylindrical shaft, square column shaft, or other shaft which has high stiffness for the axial direction compression, shearing and bending but relatively low stiffness for the torsion.

In addition, the connector 20 of the embodiment exhibits the following effects as compared to the ball joint or universal joint. For example, the ball joint includes the bottom cylindrical housing coupled to one member and having the opening at one end, the ball stud coupled to the other member and having the spherical head, the ball seat rotatably receiving the spherical head of the ball stud and fitted in the housing, and the dust cover attached between the ball stud and housing (see Patent Document 1 mentioned above). The universal joint also includes the first yoke attached to the first shaft, the second yoke attached to the second shaft, and the cross-shaped assembly connecting the first yoke and the second yoke (see Patent Document 2 mentioned above).

Therefore, while the ball joint and the universal joint require a large number of parts and a complicated assembly process, the connector 20 of the embodiment reduces the number of parts by being formed in one piece, and simplifies the assembly process by being fixed only to the first member 10 and the second member 12. In addition, while in the ball joint, frictional wear occurs between the ball head of the ball stud and the ball seat, and in the universal joint, frictional wear occurs at the connection between the first yoke and the cross-shaped assembly and at the connection between the second yoke and the cross-shaped assembly, the connector 20 of the embodiment eliminates such frictional wear points. Furthermore, while the ball joint and universal joint require additional force members such as springs or power devices such as servos to maintain a predetermined posture when no load is applied, the connector 20 of the embodiment autonomously maintains the predetermined posture by its own elastic restoring force when no load is applied.

The connector 20 of the embodiment includes the two spiral parts 22 and 26 which expand in the spiral shape with the inner diameter of zero around the center axis CA, one end of the connector 20 in the axial direction is fixed to the first member 10 and the other end of the connector 20 is fixed to the second member 12. This makes it possible to reduce the number of parts and simplify the assembly process compared to the ball joint and universal joint.

Furthermore, in the connector 20, the two spiral parts 22 and 24 26 form the shaft part 30 which extends along the center axis CA. The characteristics exhibited by the shaft 30 in this configuration allow the connector 20 to ensure the high stiffness in the axial direction compression, shear and torsion, and the low stiffness only in the bending. This allows the connector 20 to sufficiently allow only the elastic deformation due to the bending, while suppressing the elastic deformation due to the axial direction compression, shearing and torsion. As a result, as described above, the connector 20 suppresses the elastic deformation caused by the axial direction compression, shearing and torsion compared to the coil spring, and also suppresses the elastic deformation caused by the torsion compared to the cylindrical shaft, the square column shaft, or other shaft.

In the above embodiment, the spiral surfaces 23 and 27 of the connector 20 are each formed in a spiral shape formed by a trajectory in which line segments L1 and L2, connecting the common point P0 on the center axis CA and the points P1 and P2 away from the point P0 in the direction perpendicular to the center axis CA, rotate around the center axis CA with the point P0 as the center while the point P0 moves in the direction along the center axis CA. In this case, the line segments L1 and L2 are 180 degrees apart from each other around the center axis CA, and the lengths of the line segments L1 and L2 are the same. However, the line segments L1 and L2 may be spaced at intervals other than 180 degrees from each other. The lengths of the line segments L1 and L2 may be different from each other.

In the above embodiment, the connector 20 includes the two spiral parts 22 and 26 which expand in the spiral shape with the inner diameter of zero around the center axis CA. However, the connector 20 may include three or more spiral parts. In this case, the same effect as that of the connector 20 is achieved for the ball joint, the universal joint, the coil spring, and the cylindrical shaft, the square column shaft, or other shaft.

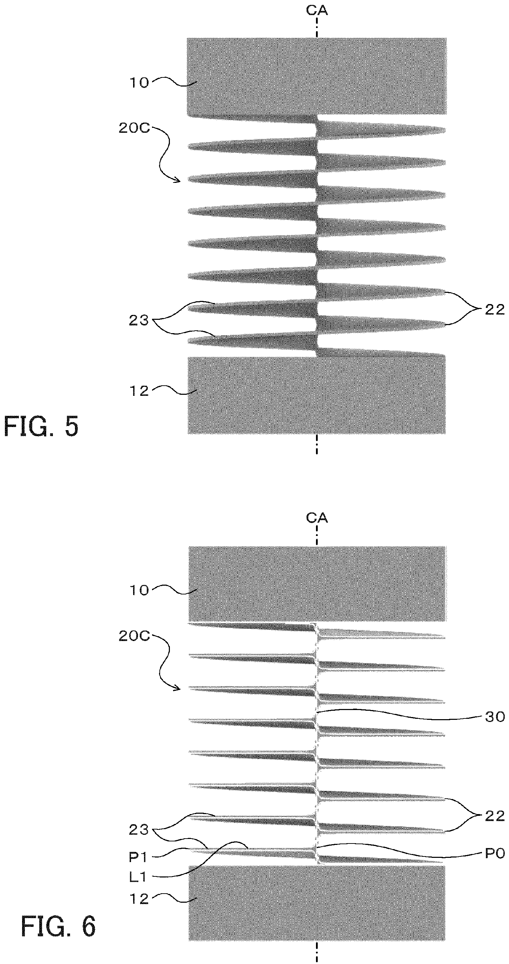

In the above embodiment, the connector 20 includes the two spiral parts 22 and 26 which expand in the spiral shape with the inner diameter of zero around the center axis CA. However, as shown in FIG. 5 and FIG. 6, a connector 20B may include one spiral part 22. FIG. 5 and FIG. 6 are an external view and a cross-sectional view of the connector 20B. The connector 20B differs from the connector 20 in that the spiral part 26 is excluded from the connector 20. Therefore, the same sections of the connector 20B as those of the connector 20 are marked with the same symbol as those of the connector 20, and a detailed description thereof is omitted. In the connector 20B, the same effect as that of the connector 20 is achieved for the ball joint, the universal joint, the coil spring, and the cylindrical shaft, the square column shaft, or other shaft member.

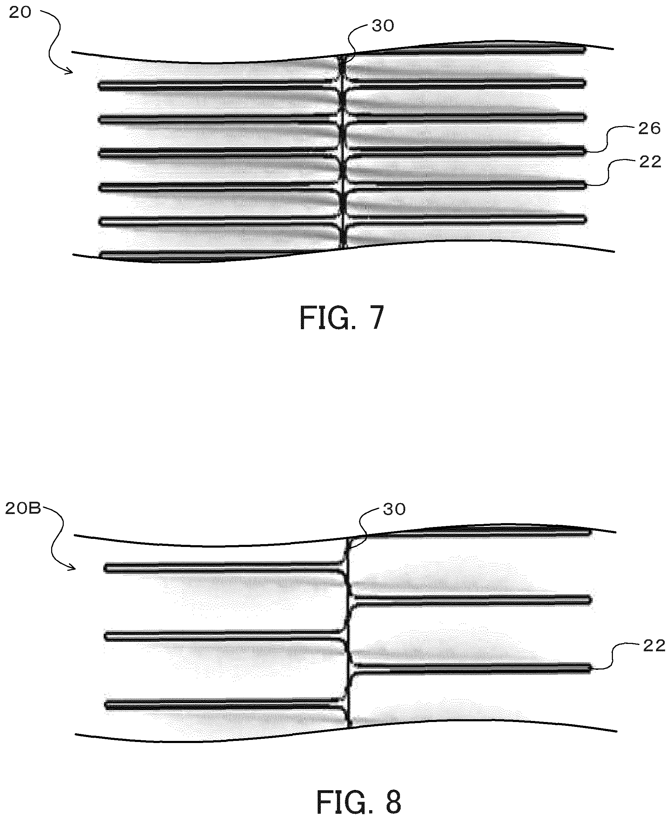

The connector 20 of FIG. 1 and FIG. 2 is compared to the connector 20B of FIG. 5 and FIG. 6. FIG. 7 and FIG. 8 are partial cross-sectional views of the connectors 20 and 20B, respectively. The connector 20 including the two spiral parts 22 and 26 provides higher stiffness in the axial direction compression, shearing, torsion and bending of the shaft part 30 than the connector 20B including the one spiral part 22. As can be seen from FIG. 7 and FIG. 8, this is due to the following reasons. The connector 20 differs from the connector 20B in that the two spiral parts 22 and 26 are formed with rotational symmetry of 180 degrees with respect to the central axis CA, and the spiral inner peripheral edge surfaces of the two spiral parts 22 and 26 that appear in a plane (a cross-section) perpendicular to the central axis CA face each other. For this reason, the connector 20 can substantially uniformly receive the compression force in the axial direction compression by the inner peripheral edge surfaces of the two spiral parts 22 and 26 facing each other. Therefore, the connector 20 suppresses the elastic deformation due to the axial direction compression, shearing and torsion more sufficiently than the connector 20B. Furthermore, in the connector 20B, the compressive force in the axial direction compression can be converted into a moment by the spiral inner peripheral edge surface of the one spiral 22, whereas in the connector 20, the spiral inner peripheral edge surfaces of the two spirals 22, 26 are opposite each other, which prevents this compressive force from being converted into the moment and makes it easier to control the deformation. In contrast to these, the connector 20B allows more sufficient elastic deformation due to the bending than the connector 20. Therefore, it is preferable to select the connectors 20 and 20B according to the application and other factors.

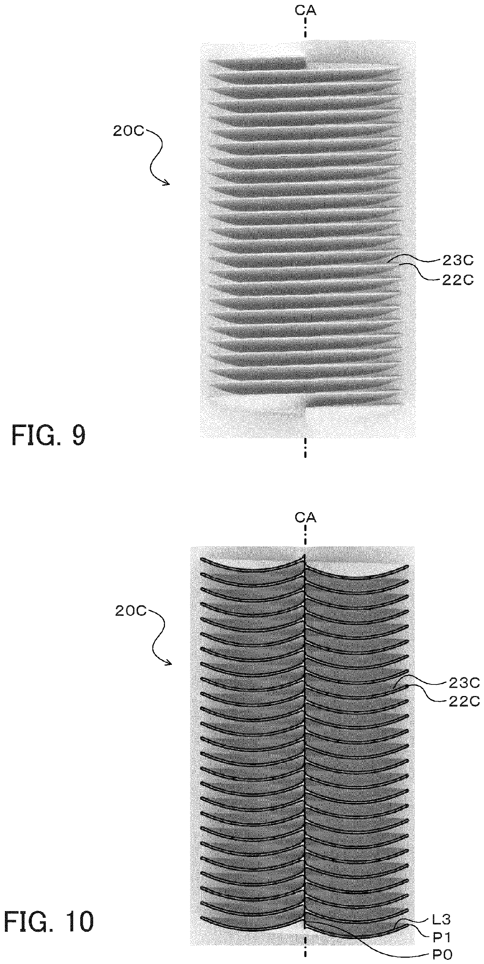

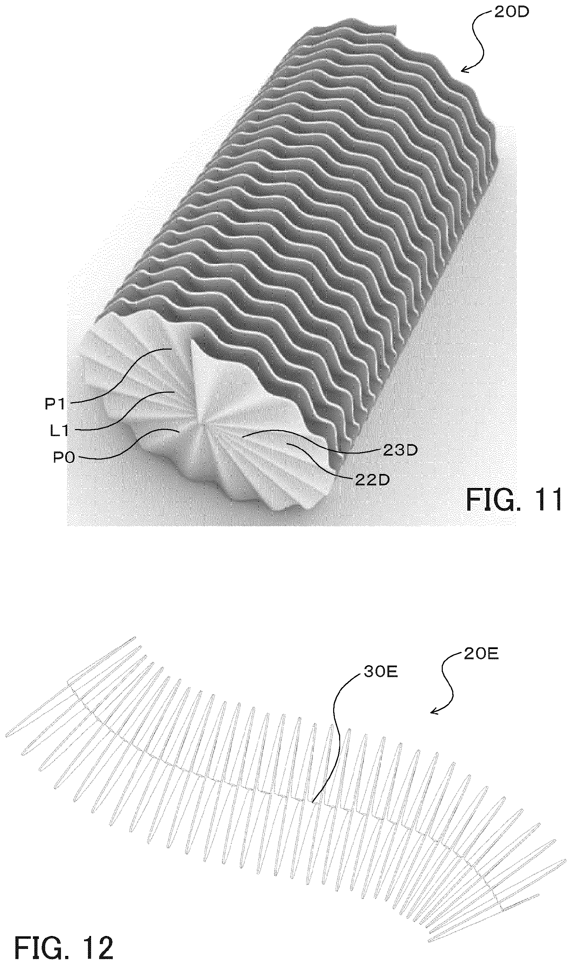

In the connector 20B, as shown in FIG. 6, the spiral surface 23 of the spiral part 22 is formed in the spiral shape formed by the rotational trajectory of the line segment L1 connecting the point P0 on the center axis CA and the point P1 away from the point P0 by the straight line. However, as shown in a modified connector 20C of FIG. 9 and FIG. 10, a spiral surface 23C of a spiral part 22C may be formed in a spiral shape formed by the rotational trajectory of the curve L3 connecting the point P0 and the point P1. Further, as shown in a modified connector 20D of FIG. 11, a spiral surface 23D of a spiral part 22D may be formed so that the outer edge of the spiral surface 23D includes a sine wave shape by superimposing a sine wave on the point P1 when the line segment L1 connecting the point P0 and the point P1 is spirally rotated. Regarding these, the same can be applied to the case of including a plurality of spiral parts such as the connector 20. In the modification shown in FIG. 11, as an example, the connector 20D is formed so that the outer edge of the spiral surface 23 includes the sine wave shape by superimposing the sine wave (sine function) when the spiral surface 23D is formed. However, when forming a spiral surface, it is not limited to superimposing the sine wave, and it is possible to superimpose any periodic function.

In the connector 20B shown in FIG. 6, the shaft part 30 extends along the center axis CA extending in a linear shape. However, as shown in the connector 20E of FIG. 12, the shaft part 30E may extend along the center axis extending in a curved shape. The same can be applied to the case of including the plurality of spiral parts such as the connector 20.

In the above embodiments and modifications, the two spiral parts 22 and 26 (the spiral surfaces 23 and 27) of the connector 20 and the one spiral part 22 of the connector 20B are formed so that the pitch in the axial direction is constant. However, the two spiral parts 22 and 26 of the connector 20 and the one spiral part 22 of the connector 20B may be formed so that the pitch in the axial direction is not constant, for example, wider at the center in the axial direction than at both ends.

In the above embodiments and modifications, the connectors 20 and 20B are formed circular in outer diameter as viewed in the axial direction. However, the connectors 20 and 20B may be formed elliptical or rectangular in outer diameter as viewed in the axial direction.

In the above embodiments and modifications, the connectors 20 and 20B are fixed to the first member 10 at one end in the axial direction and to the second member 12 at the other end. However, the connectors 20 and 20B may be integrally molded with at least one of the first member 10 and the second member 12.

The correspondence relationship between the primary components of the embodiment and the primary components of the disclosure, regarding which the problem is described in Summary, should not be considered to limit the components of the disclosure, regarding which the problem is described in Summary, since the embodiment is only illustrative to specifically describes the aspects of the disclosure, regarding which the problem is described in Summary. In other words, the disclosure, regarding which the problem is described in Summary, should be interpreted on the basis of the description in the Summary, and the embodiment is only a specific example of the disclosure, regarding which the problem is described in Summary.

The aspect of the disclosure is described above with reference to the embodiment. The disclosure is, however, not limited to the above embodiment but various modifications and variations may be made to the embodiment without departing from the scope of the disclosure.

### [Additional notes]

A connector of the present disclosure connects a first member and a second member. The connector includes at least one spiral part in a shape where the thickness is added to a spiral surface formed by a spiral trajectory in which a line, connecting a first point located on a center axis passing through a first position on the first member side and a second position on the second member side and a second point located at a position away from the center axis, rotates around the center axis with the first point as a center while the first point moves in a direction along the center axis. The connector is integrally molded as a whole.

The connector includes at least one spiral part in the shape where the thickness is added to the spiral surface formed by the spiral trajectory in which the line, connecting the first point located on the center axis passing through the first position on the first member side and the second position on the second member side and the second point located at the position away from the center axis, rotates around the center axis with the first point as the center while the first point moves in the direction along the center axis. The connector is integrally molded as a whole. This reduces the number of parts and simplifies the assembly process compared with the ball joint and universal joint.

In this connector, at least one spiral part forms a shaft part that extends along the central axis. This enables to ensure the high stiffness in the axial direction compression, shear and torsion, and the low stiffness only in the bending. This allows the connector to sufficiently allow only the elastic deformation due to the bending, while suppressing the elastic deformation due to the axial direction compression, shearing and torsion. As a result, the connector suppresses the elastic deformation caused by the axial direction compression, shearing and torsion compared to the coil spring. The connector also suppresses the elastic deformation caused by the torsion compared to the cylindrical shaft, the square column shaft, or other shaft.

In the connector of the present disclosure, the connector may include a plurality of spiral parts. This enables to suppress the elastic deformation caused by the axial direction compression, shearing and torsion compared to include one spiral part.

In the connector of the present disclosure, the spiral part may be formed so that a pitch in a direction along the center axis is constant.

## Claims

1. A connector connecting a first member and a second member, comprising:
at least one spiral part in a shape where the thickness is added to a spiral surface formed by a spiral trajectory in which a line, connecting a first point located on a center axis passing through a first position on the first member side and a second position on the second member side and a second point located at a position away from the center axis, rotates around the center axis with the first point as a center while the first point moves in a direction along the center axis,
wherein the connector is integrally molded as a whole.

2. The connector according to claim 1,
wherein the connector includes a plurality of spiral parts.

3. The connector according to claim 1 or 2,
wherein the spiral part is formed so that a pitch in a direction along the center axis is constant.
